# DEMANDE DE BREVET EUROPEEN

(11) **EP 0 779 342 A1**
(43) Date de publication de la demande: **18.06.1997**
(21) Numéro de dépôt: 96420349.1
(22) Date de dépôt: 05.12.1996
(51) Int. Cl.: C09C 3/10, C08L 35/06, C08K 9/08

(54) **Utilisation de copolymères de styrène et d'anhydride maléique comme agents dispersants et/ou de traitement de charges minérales. Compositions thermoplastiques les contenant**

(30) Priorité: 14.12.1995 FR 9515012
(71) Demandeur: COATEX S.A., 69727 Genay Cedex (FR)
(72) Inventeur: Blanchard, Pierre, 01600 Reyrieux (FR); Trouve, Patrick, 92140 Clamart (FR)

(57) **Abrégé**

Utilisation de copolymères de styrène et d'anhydride maléique de poids moléculaire moyen compris entre 1000 et 3000 et plus particulièrement entre 1500 et 2000 comme agent dispersant et/ou de traitement de charges minérales pulvérulentes basiques ou à surfaces possédant des groupes hydroxyles libres dans des résines thermoplastiques, homopolymères sans groupe aryle et à squelette uniquement carboné ou copolymères sans groupe aryle et à squelette composé de carbone et d'oxygène dont la teneur en atomes d'oxygène ne dépasse pas 22 % en poids ou leurs mélanges.

Compositions thermoplastiques fortement chargées, stables, fluides et homogènes contenant les dits agents et application de ces compositions à la fabrication de produits en matière plastique.

## Description

L'invention a pour objet l'utilisation de copolymères à base de styrène et d'anhydride maléique comme agents dispersants et/ou de traitement de charges minérales pulvérulentes dans des résines thermoplastiques homopolymères sans groupe aryle et à squelette uniquement carboné ou copolymères sans groupe aryle et à squelette composé uniquement de carbone et d'oxygène et dont la teneur en atomes d'oxygène ne dépasse pas 22 % en poids ou bien encore leurs mélanges, dans le but d'augmenter la fluidité des compositions contenant les dites matrices polymériques chargées.

L'invention concerne également les dites compositions et leur utilisation dans la fabrication de produits en matière plastique.

Depuis longtemps déjà, l'homme du métier connaît l'utilisation de divers agents pour disperser ou traiter des charges minérales telles que des talcs en vue de leur incorporation dans des résines polymères thermoplastiques. Ainsi les brevets US 4,412,026 et US 5,001,182 révèlent l'usage d'acides gras ou de leurs esters, ainsi que des composés organiques du type silane ou titanate comme agents de couplage en vue d'introduire jusqu'à 20 % en poids de talc dans la matière polymère afin d'obtenir une bonne rigidité de l'objet.

De même, il est bien connu d'utiliser des composés tels que des sels métalliques d'acide gras, par exemple comme le stéarate de calcium (US 4,255,303) ou bien encore des combinaisons d'octyl ou nonylphénol oxyéthylé avec des polyoxyéthylènes glycols (US 4,927,874 - US 4,931,493) pour traiter des talcs en vue de leur incorporation dans les thermoplastiques. Mais de tels traitements ne permettent d'obtenir que des compositions chargées aux propriétés mécaniques dégradées.

Il est également connu d'utiliser des agents dispersants ou de traitement contenant au moins une insaturation (EP 7190 - GB 1 603 300) pour traiter des charges minérales à surface acide telles que certains talcs. Mais de tels agents ne peuvent, notamment, convenir pour tous les types de talc.

Il existe encore des procédés de dispersion de charges minérales pulvérulentes utilisant des agents dispersants phosphonés (DE 2 735 160) ou bien sulfonés (EP 0 017 038) ou bien encore diverses méthodes (JP 80-142039, JP 78-65346, JP 75-109239) permettant la dispersion de certains talcs dans des résines du type polypropylène. Mais là encore tous les talcs ne sont pas dispersés avec la même efficacité dans la matière polymère aboutissant ainsi à des compositions thermoplastiques aux propriétés physico-chimiques diminuées.

Ainsi jusqu'à présent, l'homme de l'art dispose de compositions thermoplastiques chargées de talc ne lui donnant pas entière satisfaction au niveau de leurs viscosités, l'obligeant ainsi à de difficiles manipulations lors de leurs mises en oeuvre pendant la fabrication de mélanges maîtres ou d'objets en matière plastique.

Il a maintenant été trouvé de manière tout à fait surprenante que l'utilisation de copolymères à base de styrène et d'anhydride maléique de poids moléculaire moyen compris entre 1000 et 3000 et plus particulièrement entre 1500 et 2000 permet la dispersion de fortes quantités de charges minérales pulvérulentes basiques ou ayant des surfaces possédant des groupes hydroxyles libres telles que les carbonates de calcium ou les talcs ou la wollastonite ou bien encore les kaolins ou la silice pyrogénée ou les silicates d'aluminium, les micas et autres hydroxydes métalliques et plus particulièrement les talcs, les carbonates de calcium, les kaolins, la silice, la wollastonite ou l'hydroxyde de magnésium dans des matières polymères thermoplastiques, homopolymères sans groupe aryle et à squelette uniquement carboné ou copolymères sans groupe aryle et à squelette composé uniquement de carbone et d'oxygène dont la teneur en atomes d'oxygène ne dépasse pas 22 % en poids, ou leurs mélanges, tout en donnant des compositions homogènes, stables, très fluides, c'est-à-dire d'indice de fluidité (MFI) augmenté, et très facilement redispersables lors de leurs mises en oeuvre au cours de la fabrication d'objets en matière plastique.

Ainsi un des buts de l'invention consiste en l'utilisation, comme agents dispersants et/ou de traitement de charges minérales pulvérulentes basiques ou à surface dotée de groupes hydroxyles libres, de copolymères sélectionnés parmi les copolymères styrène-anhydride maléique de poids moléculaire moyen compris entre 1000 et 3000 et plus particulièrement entre 1500 et 2000, permettant l'obtention de compositions thermoplastiques, homopolymères sans groupe aryle et à squelette uniquement carboné ou copolymères sans groupe aryle et à squelette composé uniquement de carbone et d'oxygène dont la teneur en atomes d'oxygène ne dépasse pas 22 % en poids, ou leurs mélanges, fortement chargées, stables, fluides et homogènes ce qui se traduit par un indice de fluidité (MFI) augmenté par rapport aux compositions thermoplastiques ne contenant pas le dit copolymère styrène-anhydride maléique.

Un deuxième but de l'invention est de fournir des compositions thermoplastiques, homopolymères sans groupe aryle et à squelette uniquement carboné ou copolymères sans groupe aryle et à squelette composé uniquement de carbone et d'oxygène dont la teneur en atomes d'oxygène ne dépasse pas 22 % en poids ou bien leurs mélanges, fluides, homogènes et contenant jusqu'à 80 % en poids, par rapport au poids total de la charge et de la résine, de charge minérale pulvérulente basique ou à surface disposant de groupes hydroxyles libres, compositions fortement chargées, homogènes, stables, fluides et ayant un indice de fluidité MFI augmenté.

Ainsi, alors que l'art antérieur décrit de nombreux types d'agents dispersants de charges minérales dans les matières polymères thermoplastiques ne permettant pas de disperser de manière uniforme et à haute concentration tous les types de charges minérales pulvérulentes basiques ou à surface disposant de groupes hydroxyles libres, l'invention s'en distingue par l'utilisation de copolymères à base uniquement de styrène et d'anhydride maléique qui permettent ainsi de disperser de manière uniforme de fortes concentrations de charges minérales pulvérulentes basiques ou à surface disposant de groupes hydroxyles libres.

Ces copolymères utilisés comme dispersants et/ou agents de traitement de charges minérales pulvérulentes à surfaces basiques ou possédant des groupes hydroxyles libres ont un poids moléculaire variant entre 1000 et 3000 et plus particulièrement entre 1500 et 2000.

L'invention concerne également l'obtention de nouvelles compositions thermoplastiques, homopolymères sans groupe aryle et à squelette uniquement carboné ou copolymères sans groupe aryle et à squelette composé uniquement de carbone ou d'oxygène dont la teneur en atomes d'oxygène ne dépasse pas 22 % en poids ou leurs mélanges, contenant l'agent dispersant et/ou de traitement copolymère de styrène et d'anhydride maléique de poids moléculaire moyen compris entre entre 1000 et 3000 et plus particulièrement entre 1500 et 2000 , des charges minérales pulvérulentes basiques ou à surface contenant des groupes hydroxyles libres, une résine thermoplastique et éventuellement d'autres additifs bien connus.

La charge minérale pulvérulente basique ou à surface dotée de groupes hydroxyles libres peut être choisie parmi les carbonates de calcium naturels ou synthétiques, les silicates tels que les talcs, les kaolins, les silicates d'aluminium, les micas, les silicates de calcium tels que la wollastonite, les bentonites ou bien parmi la silice pyrogénée ou bien encore parmi les hydroxydes métalliques tels que par exemple l'hydroxyde de magnésium, d'aluminium, de calcium, de fer ou autres ou leurs mélanges et est plus particulièrement choisie parmi les talcs, les carbonates de calcium naturels ou synthétiques, les kaolins, la wollastonite, la silice pyrogénée, l'hydroxyde de magnésium ou leurs mélanges et très particulièrement parmi les talcs.

Cette charge minérale pulvérulente basique ou à surface dotée de groupes hydroxyles libres a de préférence une dimension comprise entre 0,01 et 100 micromètres, la quantité de matière minérale pulvérulente introduite dans la composition ainsi que le MFI de la dite composition dépendant non seulement de la dite matière minérale mais aussi de sa granulométrie.

La résine thermoplastique, homopolymère sans groupe aryle et à squelette uniquement carboné ou copolymère sans groupe aryle et à squelette composé uniquement de carbone et d'oxygène dont la teneur en atomes d'oxygène ne dépasse pas 22 % en poids, peut être choisie, par exemple, parmi les homopolymères ou copolymères de l'éthylène, du propylène, du butène, du butadiène, du butylène et ses isomères, des éthylène-acétate de vinyle (EVA) ou autres et est plus particulièrement choisi parmi les polypropylènes, les polyéthylènes, les copolymères éthylène-propylène, les copolymères du butène et encore plus particulièrement choisis parmi les polypropylènes.

Les additifs éventuels de type connus sont choisis, par exemple, parmi les stabilisants thermiques ou photochimiques, les antioxydants, les lubrifiants, les plastifiants, les antistatiques, les ignifugeants, les désactivateurs de métaux, les billes de verre, les fibres minérales et/ou organiques, les pigments et autres.

La composition thermoplastique, selon l'invention, se caractérise en ce qu'elle comprend:
a) la résine thermoplastique, homopolymère sans groupe aryle et à squelette uniquement carboné ou copolymère sans groupe aryle et à squelette composé uniquement de carbone et d'oxygène dont la teneur en atomes d'oxygène ne dépasse pas 22 % en poids, ou leurs mélanges
b) jusqu'à 80 % en poids et en particulier de 20 % à 80 % en poids de charge minérale pulvérulente basique ou à surface disposant de groupes hydroxyles libres, par rapport au poids total de la charge et de la résine
c) 0,25 % à 3,0 % en poids, par rapport au poids total de la charge minérale pulvérulente, d'un copolymère de styrène et d'anhydride maléique de poids moléculaire moyen compris entre 1000 et 3000 et plus particulièrement entre 1500 et 2000
d) éventuellement, d'autres additifs de type connu.

Elle se caractérise plus particulièrement en ce qu'elle comprend :
a) une résine thermoplastique choisie parmi les polymères ou copolymères de l'éthylène, du propylène, du butène, du butadiène, du butylène et ses isomères, de l'éthylène-acétate de vinyle et plus particulièrement choisie parmi les polypropylènes, polyéthylènes, copolymères d'éthylène-propylène, copolymères du butène et encore plus particulièrement parmi les propylènes
b) jusqu'à 80 % en poids, par rapport au poids total de la charge et de la résine, de charge minérale pulvérulente basique ou à surface disposant de groupes hydroxyles libres choisie parmi les carbonates de calcium naturels ou synthétiques, les talcs, les kaolins, la wollastonite, la silice pyrogénée, l'hydroxyde de magnésium, l'hydroxyde d'aluminium ou leurs mélanges et encore plus particulièrement choisie parmi les talcs
c) de 0,5 % à 1,0 % en poids, par rapport au poids total de la charge minérale pulvérulente, d'un copolymère de styrène et d'anhydride maléique de poids moléculaire moyen compris entre 1000 et 3000 et plus particulièrement entre 1500 et 2000
d) éventuellement, d'autres additifs de type connu.

De manière très préférentielle la résine thermoplastique est choisie parmi les résines plus particulièrement caractérisées et comprenant de 20 % à 80 % en poids de charge minérale b).

La fluidité de la composition thermoplastique selon l'invention est déterminée par la mesure de l'indice de fluidité (MFI), réalisée au moyen de l'appareil commercialisé par la société ZWICK de type 4105.

Cet indice est défini, selon la norme ASTM 1238, comme étant la quantité exprimée en grammes pour 10 minutes, de polymère et/ou copolymère qui s'écoule à une température choisie dans l'intervalle limité par les températures de ramollissement et de transformation sous une charge donnée normalisée (2,16 kg et 10 kg) au travers d'une filière de diamètre déterminé (2,09 à 2,10 millimètres) pendant un temps mesuré.

L'amélioration, par rapport aux compositions de l'art antérieur, des compositions thermoplastiques selon l'invention se traduit par une diminution de leur viscosité, donc une augmentation de l'indice de fluidité MFI, cette diminution de viscosité permettant une mise en oeuvre plus facile des compositions selon l'invention pendant la fabrication de mélanges maîtres ou d'objet en matière plastique.

La portée et l'intérêt de l'invention seront mieux perçus grâce à la description illustrative des exemples qui ne présentent aucun caractère limitatif.

### EXEMPLE 1 :

Cet exemple concerne l'utilisation de divers agents en vue de disperser du talc dans une résine polypropylène pour évaluer leur efficacité dispersante et leur capacité à fournir une composition de polypropylène fortement chargée, fluide et homogène c'est-à-dire présentant un indice de fluidité élevé.

Pour chaque essai relatif aux divers agents testés ainsi que pour l'essai témoin on a introduit, dans un mélangeur GUITTARD à bras en Z, d'une capacité de 1,5 litres et disposant d'une cuve chauffée électriquement à 240°C, 300 grammes de talc pulvérulent provenant de Finlande, commercialisé par la société Finnminerals sous le nom Finntalc MO5, et dont 97 % des particules ont un diamètre moyen inférieur à 10 micromètres.

Après 15 minutes de préchauffage à 240°C de la charge, il est introduit ou bien 2,25 grammes de l'agent dispersant à tester pour les essais relatifs aux divers agents à tester, et puis simultanément 0,25 gramme de stabilisant thermique vendu par la société Ciba-Geigy sous le nom IRGANOX 1010 et 196,2 grammes d'une résine polypropylène homopolymère vendue par la société Appryl sous le nom de PPH 3120 MN1 ou bien directement et simultanément 0,25 gramme du stabilisant précité et 196,2 grammes de la résine précitée pour l'essai témoin.

L'ensemble est mélangé durant 15 minutes à cette température et à la vitesse de 42 tours/minute.

Le mélange ainsi préparé, on a alors effectué un calandrage d'une partie de ce mélange sous forme de plaques qui ont été découpées en petits cubes ayant une dimension de 2 à 3 millimètres de côté et dont on a mesuré à 230°C l'indice de fluidité MFI sous une charge de 2,16 kg et de 10 kg.

Les divers agents testés sont les suivants :

### Essai n° 1 :

Cet essai est un essai témoin, aucun agent dispersé n'est utilisé.

### Essai n° 2 :

Cet essai met en oeuvre, comme agent dispersant, un copolymère styrène-anhydride maléique sulfoné de poids moléculaire moyen d'environ 1500.

### Essai n° 3 :

Cet essai met en oeuvre, comme agent dispersant, un copolymère styrène-anhydride maléique sulfoné de poids moléculaire moyen d'environ 2000.

### Essai n° 4 :

Cet essai, qui illustre l'art antérieur, met en oeuvre, comme agent dispersant, un phosphate de stéaryle.

### Essai n° 5 :

Cet essai, qui illustre l'invention, met en oeuvre, comme agent dispersant, un copolymère de styrène et d'anhydride maléique de poids moléculaire moyen égal à 1600.

### Essai n° 6 :

Cet essai, qui illustre l'invention, met en oeuvre, comme agent dispersant, un copolymère de styrène et d'anhydride maléique de poids moléculaire moyen égal à 1700.

### Essai n° 7 :

Cet essai, qui illustre l'invention, met en oeuvre, comme agent dispersant, un copolymère de styrène et d'anhydride maléique de poids moléculaire moyen égal à 1900.

Les résultats sont rassemblés dans le tableau 1 qui suit :

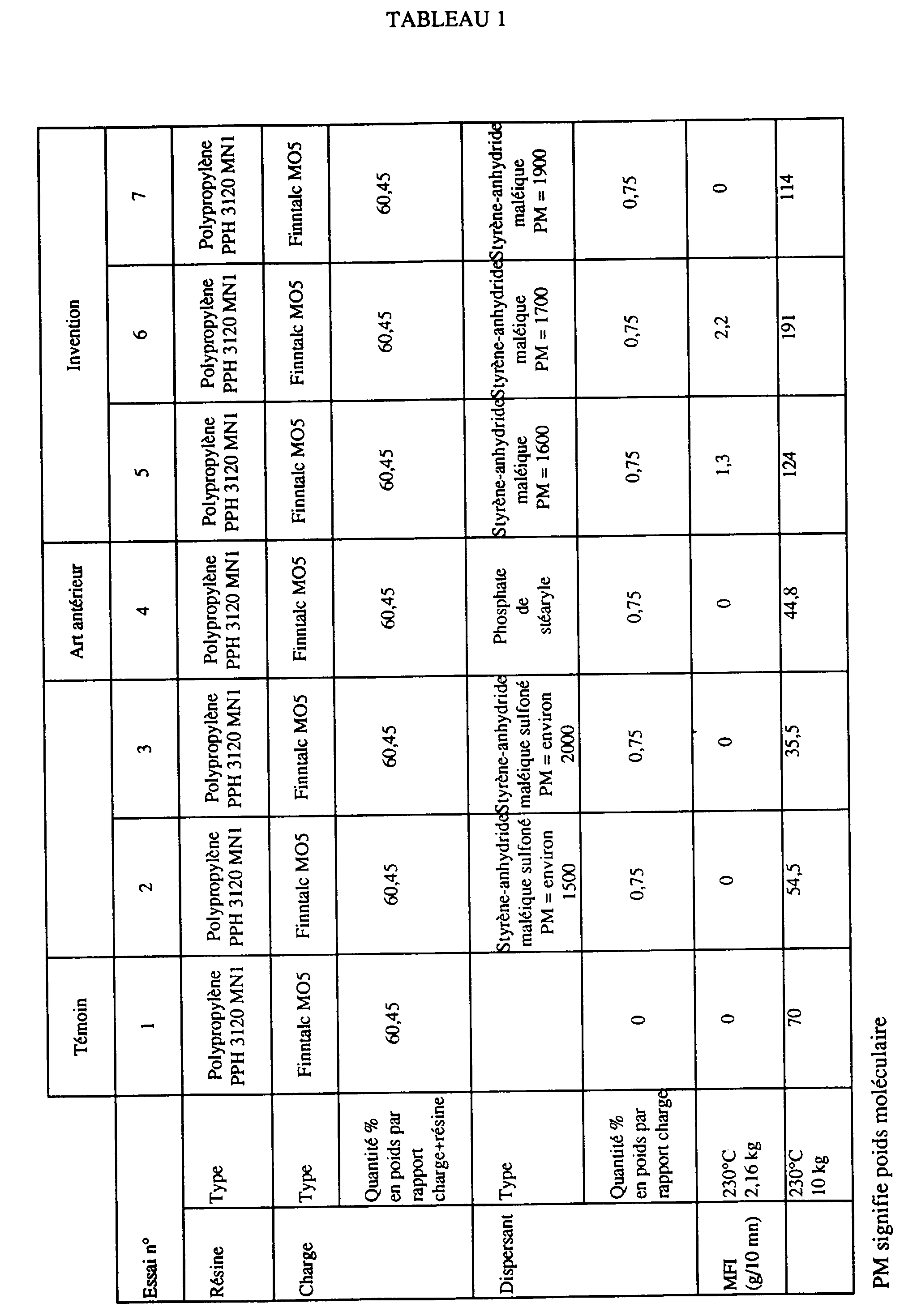

La lecture du tableau 1 permet de constater que l'utilisation, selon l'invention, de copolymères styrène-anhydride maléique de poids moléculaire moyen compris entre 1000 et 3000 et plus particulièrement entre 1500 et 2000 aboutit à des compositions thermoplastiques fortement chargées (plus de 60 % en poids de talc sec par rapport au poids total du talc et de la résine), à fluidité et homogénéité améliorées se traduisant, dans cette formulation, par un indice de fluidité MFI supérieur à 90 g/10 mn à 230°C et 10 kg de charge alors que les essais n° 1 à 4 donnent des compositions possédant des MFI nettement inférieurs.

### EXEMPLE 2 :

Cet exemple a pour but d'illustrer les doses d'utilisation, selon l'invention, d'agents en vue de disperser du talc dans une résine polypropylène.

### Essai n° 8 :

Cet essai est un essai témoin. Aucun agent dispersant n'est utilisé.
Ainsi avec le même matériel et dans les mêmes conditions opératoires que celles de l'exemple 1, on a mélangé 200 grammes de polypropylène homopolymère vendu par la société Appryl sous la dénomination PPH 3120 MN1, 300 grammes de talc pulvérulent vendu par la société Finnminerals sous le nom Finntalc MO5, 0,25 gramme de stabilisant thermique vendu par la société Ciba-Geigy sous le nom Irganox 1010.

Le MFI de la composition ainsi préparée est alors mesuré, selon le même mode opératoire que dans l'exemple 1 et les résultats obtenus sont de 0,21 g/10 mn à 230°C et sous une charge de 2,16 kg et de 77 g/10 mn à 230°C et sous une charge de 10 kg.

### Essai n° 9 :

Cet essai illustre l'utilisation, selon l'invention, de 0,25 % en poids par rapport à la charge, d'un copolymère styrène-anhydride maléique de poids moléculaire moyen égal à 1700.

Ainsi avec le même matériel et dans les mêmes conditions opératoires que celles de l'exemple 1, on a mélangé 300 grammes de talc pulvérulent vendu par la société Finnminerals sous le nom Finntalc MO5, 0,25 gramme de stabilisant thermique vendu par la société Ciba-Geigy sous le nom Irganox 1010, 0,75 gramme du copolymère styrène-anhydride maléique de poids moléculaire moyen égal à 1700 et enfin 200 grammes de la résine polypropylène vendue par la société Appryl sous le nom PPH 3120 MN1.

Le MFI de la composition ainsi préparée est alors mesuré, selon le même mode opératoire que dans l'exemple 1 et les résultats obtenus sont de 2,13 g/10 mn à 230°C et sous une charge de 2,16 kg et de 123 g/10 mn à 230°C et sous une charge de 10 kg.

### Essai n° 10 :

Cet essai illustre l'utilisation, selon l'invention, de 0,50 % en poids, par rapport à la charge, du même copolymère que celui de l'essai n° 9.

Ainsi avec le même matériel et dans les mêmes conditions opératoires que celles de l'exemple 1, on a mélangé 1,50 grammes du copolymère styrène-anhydride maléique de poids moléculaire moyen égal à 1700 aux mêmes quantités de talc, stabilisant thermique et résine que celles de l'essai n° 9.

Le MFI de la composition ainsi préparée est alors mesuré, selon le même mode opératoire que dans l'exemple 1 et les résultats obtenus sont de 3,6 g/10 mn à 230°C et sous une charge de 2,16 kg et de 190 g/10 mn à 230°C et sous une charge de 10 kg.

### Essai n° 11 :

Cet essai illustre l'utilisation, selon l'invention, de 0,75 % en poids, par rapport à la charge, du même copolymère que celui de l'essai n° 9.

Ainsi avec le même matériel et dans les mêmes conditions opératoires que celles de l'exemple 1, on a mélangé 2,25 grammes du copolymère styrène-anhydride maléique de poids moléculaire moyen égal à 1700 aux mêmes quantités de talc, stabilisant thermique et résine que celles de l'essai n° 9.

Le MFI de la composition ainsi préparée est alors mesuré, selon le même mode opératoire que dans l'exemple 1 et les résultats obtenus sont de 2,5 g/10 mn à 230°C et sous une charge de 2,16 kg et de 222 g/10 mn à 230°C et sous une charge de 10 kg.

### Essai n° 12 :

Cet essai illustre l'utilisation, selon l'invention, de 1,00 % en poids, par rapport à la charge, du même copolymère que celui de l'essai n° 9.

Ainsi avec le même matériel et dans les mêmes conditions opératoires que celles de l'exemple 1, on a mélangé 3,00 grammes du copolymère styrène-anhydride maléique de poids moléculaire moyen égal à 1700 aux mêmes quantités de talc, stabilisant thermique et résine que celles de l'essai n° 9.

Le MFI de la composition ainsi préparée est alors mesuré, selon le même mode opératoire que dans l'exemple 1 et les résultats obtenus sont de 2,1 g/10 mn à 230°C et sous une charge de 2,16 kg et de 150 g/10 mn à 230°C et sous une charge de 10 kg.

### Essai n° 13 :

Cet essai illustre l'utilisation, selon l'invention, de 2,00 % en poids, par rapport à la charge, du même copolymère que celui de l'essai n° 9.

Ainsi avec le même matériel et dans les mêmes conditions opératoires que celles de l'exemple 1, on a mélangé 6,00 grammes du copolymère styrène-anhydride maléique de poids moléculaire moyen égal à 1700 aux mêmes quantités de talc, stabilisant thermique et résine que celles de l'essai n° 9.

Le MFI de la composition ainsi préparée est alors mesuré, selon le même mode opératoire que dans l'exemple 1 et les résultats obtenus sont de 0,8 g/10 mn à 230°C et sous une charge de 2,16 kg et de 92,1 g/10 mn à 230°C et sous une charge de 10 kg.

### Essai n° 14 :

Cet essai illustre l'utilisation, selon l'invention, de 3,00 % en poids, par rapport à la charge, du même copolymère que celui de l'essai n° 9.

Ainsi avec le même matériel et dans les mêmes conditions opératoires que celles de l'exemple 1, on a mélangé 9,00 grammes du copolymère styrène-anhydride maléique de poids moléculaire moyen égal à 1700 aux mêmes quantités de talc, stabilisant thermique et résine que celles de l'essai n° 9.

Le MFI de la composition ainsi préparée est alors mesuré, selon le même mode opératoire que dans l'exemple 1 et les résultats obtenus sont de 0,64 g/10 mn à 230°C et sous une charge de 2,16 kg et de 91,1 g/10 mn à 230°C et sous une charge de 10 kg.

Le tableau 2 suivant rassemble les résultats des différents essais de l'exemple :

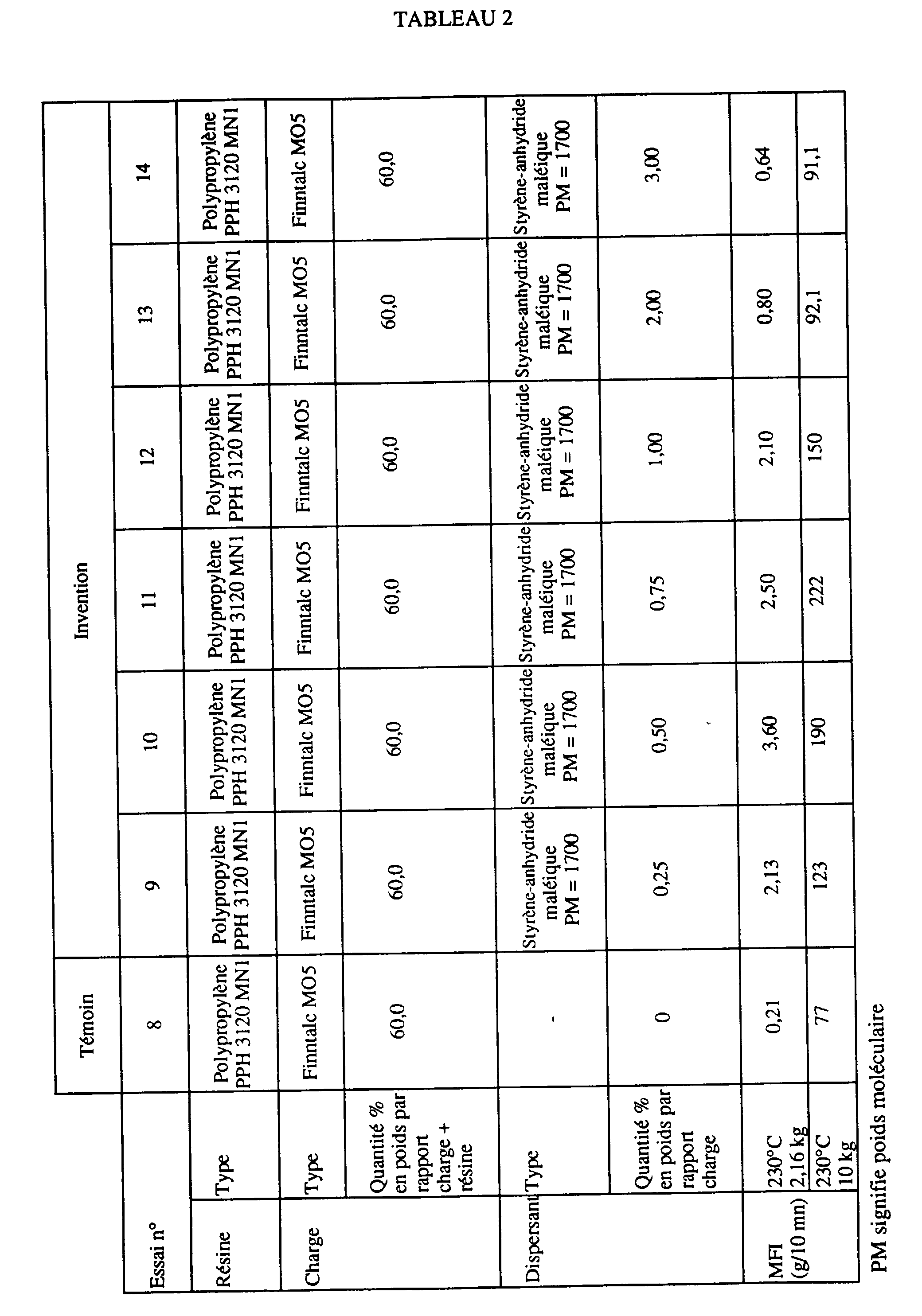

La lecture du tableau 2 permet de constater que l'utilisation, selon l'invention, de 0,25 % à 3 % en poids et plus particulièrement de 0,50 % à 1 % en poids, par rapport au poids total de la charge, de copolymère styrène-anhydride maléique de poids moléculaire moyen compris entre 1000 et 3000 et plus particulièrement entre 1500 et 2000 permet d'obtenir des compositions thermoplastiques de forte concentration en talc (60 % en poids de talc sec par rapport au poids total de la charge et de la résine), à stabilité, fluidité et homogénéité améliorées se traduisant, dans cette formulation par un MFI supérieur à 90 g/10 mn à 230°C et sous une charge de 10 kg alors que le témoin ne présente qu'une valeur de 77 g/10 mn pour un MFI mesuré dans les mêmes conditions et par une augmentation du MFI à 230°C et sous une charge de 2,16 kg d'au moins trois fois pour les compositions selon l'invention par rapport à la composition témoin.

### EXEMPLE 3 :

Cet exemple a pour but d'illustrer des concentrations en talc plus élevées que les précédentes.

### Essai n° 15 :

Cet essai est un essai témoin et permet de déterminer la mauvaise homogénéité et fluidité représentées par les faibles valeurs du MFI obtenues pour une formulation sans agent dispersant et comprenant un taux de charge équivalent à 80 % en poids par rapport au poids total de la charge et de la résine.

Ainsi avec le même matériel et dans les mêmes conditions opératoires que celles de l'exemple 1, on a mélangé 400 grammes de talc pulvérulent vendu par la société Talcs de Luzenac sous la référence 1445 dont 50 % des particules ont un diamètre moyen inférieur à 9,9 micromètres, 0,25 gramme de stabilisant thermique vendu par la société Ciba-Geigy sous le nom Irganox 1010, 4,5 grammes d'un désactivateur de métaux du type nonylphénol oxyéthylé 10 fois et 1,5 grammes d'un autre désactivateur de métaux du type polyéthylène glycol de poids moléculaire 300 et enfin 100 grammes de la résine polypropylène vendue par la société Appryl sous le nom PPH 3120 MN1.

Le MFI de la composition ainsi préparée est alors mesuré, selon le même mode opératoire que celui de l'exemple 1 et le résultat obtenu est de 26,5 g/10 mn à 230°C et sous une charge de 2,16 kg.

### Essai n° 16 :

Cet essai, qui illustre l'invention, met en oeuvre, comme agent dispersant, un copolymère styrène-anhydride maléique de poids moléculaire moyen égal à 1700. Cet essai montre également l'efficacité de l'agent dispersant utilisé en permettant la comparaison des valeurs de MFI de la composition témoin et celles de la composition selon l'invention.

Ainsi avec le même matériel et dans les mêmes conditions opératoires que celles de l'essai précédent, on a mélangé les mêmes constituants dans les mêmes quantités que celles de l'essai n° 15 avec en plus l'ajout de 4,00 grammes du copolymère styrène-anhydride maléique de poids moléculaire moyen égal à 1700.

Le MFI de la composition ainsi préparée est alors mesuré, selon le même mode opératoire que celui de l'exemple 1 et le résultat obtenu est de 60 g/10 mn et sous une charge de 2,16 kg.

L'utilisation, selon l'invention, permet ainsi d'obtenir une composition fortement chargée en talc (80 % en poids) plus stable, homogène et fluide que celle obtenue sans utilisation du copolymère styrène-anhydride maléique comme agent dispersant, permettant ainsi une mise en oeuvre plus aisée de la composition thermoplastique lors de la fabrication d'objets en matière plastique.

### EXEMPLE 4 :

Cet exemple a pour but d'illustrer les possibilités de disperser différentes charges.

### Essai n° 17 :

Cet essai est un essai témoin pour une composition polypropylène chargée à l'aide de talc provenant du sud de la France. Aucun agent dispersant n'est utilisé.

Ainsi avec le même matériel et dans les mêmes conditions opératoires que celles de l'exemple 1, on a mélangé 300 grammes de talc pulvérulent vendu par la société Talcs de Luzenac sous la référence 1445, 0,25 gramme de stabilisant thermique vendu par la société Ciba-Geigy sous le nom Irganox 1010 et enfin 200 grammes de la résine polypropylène vendue par la société Appryl sous le nom PPH 3120 MN1.

Le MFI de la composition ainsi préparée est alors mesuré, selon le même mode opératoire que celui de l'exemple 1 et les résultats obtenus sont de 3,3 g/10 mn à 230°C et sous une charge de 2,16 kg et 81,9 g/10 mn à 230°C et sous une charge de 10 kg.

### Essai n° 18 :

Cet essai illustre l'utilisation, selon l'invention, d'un copolymère styrène-anhydride maléique de poids moléculaire moyen égal à 1700. Il permet également de montrer l'efficacité de ce dernier en permettant la comparaison des valeurs de l'indice de fluidité de la composition selon l'invention et celui de la composition témoin.

Ainsi avec le même matériel et dans les mêmes conditions opératoires que celles de l'essai précédent, on a mélangé les mêmes constituants dans les mêmes quantités que celles de l'essai n° 17 avec en plus l'ajout de 1,5 grammes du copolymère styrène-anhydride maléique de poids moléculaire moyen égal à 1700.

Le MFI de la composition ainsi préparée est alors mesuré, selon le même mode opératoire que celui de l'exemple 1 et les résultats obtenus sont de 4,4 g/10 mn à 230°C et sous une charge de 2,16 kg et 110 g/10 mn à 230°C et sous une charge de 10 kg.

### Essai n° 19 :

Cet essai est un essai témoin pour une composition polypropylène chargée à l'aide de talc norvégien. Aucun agent dispersant n'est utilisé.

Ainsi avec le même matériel et dans les mêmes conditions opératoires que celles de l'exemple 1, on a mélangé 300 grammes de talc pulvérulent vendu par la société Norwegian Talc sous le nom Microtalc IT EXTRA dont 100 % des particules ont un diamètre moyen inférieur à 20 micromètres, 0,25 gramme de stabilisant thermique vendu par la société Ciba-Geigy sous le nom Irganox 1010 et enfin 200 grammes de la résine polypropylène vendue par la société Appryl sous le nom PPH 3120 MN1.

Le MFI de la composition ainsi préparée est alors mesuré, selon le même mode opératoire que celui de l'exemple 1 et le résultat obtenu est de 32,7 g/10 mn à 230°C et sous une charge de 10 kg.

### Essai n° 20 :

Cet essai, qui illustre l'invention, met en oeuvre, comme agent dispersant, un copolymère styrène-anhydride maléique de poids moléculaire moyen égal à 1700.

Cet essai montre également l'efficacité de l'agent dispersant utilisé en permettant la comparaison des valeurs de MFI de la composition selon l'invention et celles de la composition témoin de l'essai précédent.

Ainsi avec le même matériel et dans les mêmes conditions opératoires que celles de l'essai précédent, on a mélangé les mêmes constituants dans les mêmes quantités que celles de l'essai n° 19 avec en supplément l'ajout de 1,5 grammes du copolymère styrène-anhydride maléique de poids moléculaire moyen égal à 1700.

Le MFI de la composition ainsi préparée est alors mesuré, selon le même mode opératoire que celui de l'exemple 1 et le résultat obtenu est de 82,9 g/10 mn à 230°C et sous une charge de 10 kg.

### Essai n° 21 :

Cet essai, qui illustre l'invention, met en oeuvre, comme agent dispersant, un copolymère styrène-anhydride maléique de poids moléculaire moyen égal à 1700. Cet essai montre également l'efficacité de l'agent dispersant utilisé en permettant la comparaison des valeurs de MFI de la composition selon l'invention et celles de la composition témoin de l'essai précédent.

Ainsi avec le même matériel et dans les mêmes conditions opératoires que celles de l'essai précédent, on a mélangé les mêmes constituants dans les mêmes quantités que celles de l'essai n° 19 avec en supplément l'ajout de 3,00 grammes du copolymère styrène-anhydride maléique de poids moléculaire moyen égal à 1700.

Le MFI de la composition ainsi préparée est alors mesuré, selon le même mode opératoire que celui de l'exemple 1 et le résultat obtenu est de 82,9 g/10 mn à 230°C et sous une charge de 10 kg.

### Essai n° 22 :

Cet essai est un essai témoin pour une composition polypropylène contenant du kaolin comme charge minérale. Cette composition témoin ne contient aucun agent dispersant.

Ainsi avec le même matériel et dans les mêmes conditions opératoires que celles de l'exemple 1, on a mélangé 300 grammes de kaolin pulvérulent vendu par la société Omya S.A. sous le nom Omya II dont 86 % des particules ont un diamètre moyen inférieur à 2 micromètres, 1,25 grammes de stabilisant thermique vendu par la société Ciba-Geigy sous le nom Irganox 1010 et 200 grammes de la même résine polypropylène vendue par la société Appryl sous le nom PPH 3120 MN1.

Le MFI de la composition ainsi préparée est alors mesuré, selon le même mode opératoire que dans les essais précédents et le résultat obtenu est de 28,8 g/10 mn à 230°C et sous une charge de 2,16 kg.

### Essai n° 23 :

Cet essai, qui illustre l'invention, met en oeuvre, comme agent dispersant, un copolymère styrène-anhydride maléique de poids moléculaire moyen égal à 1700. Cet essai montre également l'efficacité de l'agent dispersant utilisé en permettant la comparaison des valeurs de MFI de la composition selon l'invention et celles de la composition témoin de l'essai précédent.

Ainsi avec le même matériel et dans les mêmes conditions opératoires que celles de l'essai précédent, on a mélangé les mêmes constituants dans les mêmes quantités que celles de l'essai n° 22 avec en supplément l'ajout de 3,00 grammes du copolymère styrène-anhydride maléique de poids moléculaire moyen égal à 1700.

Le MFI de la composition ainsi préparée est alors mesuré, selon le même mode opératoire que celui de l'exemple 1 et le résultat obtenu est de 130 g/10 mn à 230°C et sous une charge de 2,16 kg.

### Essai n° 24 :

Cet essai est un essai témoin pour une composition polypropylène contenant de la wollastonite comme charge minérale. Cette composition témoin ne contient aucun agent dispersant.

Ainsi avec le même matériel et dans les mêmes conditions opératoires que celles de l'exemple 1, on a mélangé 300 grammes de wollastonite vendu par la société Croxton & Garry sous le nom Hycon wollastonite dont 99,9 % des particules sont plus fines que 45 micromètres, 0,25 grammes du stabilisant thermique vendu par la société Ciba-Geigy sous le nom Irganox 1010 et enfin 200 grammes de la résine polypropylène vendue par la société Appryl sous le nom PPH 3120 MN1.

Le MFI de la composition ainsi préparée est alors mesuré, selon le même mode opératoire que celui de l'exemple 1 et le résultat obtenu est de 146 g/10 mn à 230°C et sous une charge de 10 kg.

### Essai n° 25 :

Cet essai, qui illustre l'invention, met en oeuvre, comme agent dispersant, un copolymère styrène-anhydride maléique de poids moléculaire moyen égal à 1700. Cet essai montre également l'efficacité de l'agent dispersant utilisé en permettant la comparaison des valeurs de MFI de la composition selon l'invention et celles de la composition témoin de l'essai précédent.

Ainsi avec le même matériel et dans les mêmes conditions opératoires que celles de l'essai précédent, on a mélangé les mêmes constituants dans les mêmes quantités que celles de l'essai n° 24 avec en supplément l'ajout de 3,00 grammes du copolymère styrène-anhydride maléique de poids moléculaire moyen égal à 1700.

Le MFI de la composition ainsi préparée est alors mesuré, selon le même mode opératoire que celui de l'exemple 1 et le résultat obtenu est de 194 g/10 mn à 230°C et sous une charge de 10 kg.

### Essai n° 26 :

Cet essai est un essai témoin pour une composition polypropylène chargée à l'aide de carbonate de calcium naturel. Aucun agent dispersant n'est utilisé.

Ainsi avec le même matériel et dans les mêmes conditions opératoires que celles de l'exemple 1, on a mélangé 350 grammes de carbonate de calcium pulvérulent vendu par la société OMYA S.A. sous le nom Millicarb dont 36 % des particules ont un diamètre moyen inférieur à 2 micromètres, 0,25 gramme du stabilisant thermique vendu par la société Ciba-Geigy sous le nom Irganox 1010 et enfin 150 grammes de la résine polypropylène vendue par la société Appryl sous le nom PPH 3120 MN1.

Le MFI de la composition ainsi préparée est alors mesuré, selon le même mode opératoire que celui de l'exemple 1 et les résultats obtenus sont de 3,2 g/10 mn à 230°C et sous une charge de 2,16 kg et de 80 g/10 mn à 230°C et sous une charge de 10 kg.

### Essai n° 27 :

Cet essai, qui illustre l'invention, met en oeuvre, comme agent dispersant, un copolymère styrène-anhydride maléique de poids moléculaire moyen égal à 1700. Cet essai montre également l'efficacité de l'agent dispersant utilisé en permettant la comparaison des valeurs de MFI de la composition selon l'invention et celles de la composition témoin de l'essai précédent.

Ainsi avec le même matériel et dans les mêmes conditions opératoires que celles de l'essai précédent, on a mélangé les mêmes constituants dans les mêmes quantités que celles de l'essai n° 26 avec en supplément l'ajout de 3,5 grammes du copolymère styrène-anhydride maléique de poids moléculaire moyen égal à 1700.

Le MFI de la composition ainsi préparée est alors mesuré, selon le même mode opératoire que celui de l'exemple 1 et les résultats obtenus sont de 7,4 g/10 mn à 230°C et sous une charge de 2,16 kg et de 127 g/10 mn à 230°C et sous une charge de 10 kg.

### Essai n° 28 :

Cet essai est un essai témoin pour une composition polypropylène chargée à l'aide de silice. Aucun agent dispersant n'est utilisé.

Ainsi avec le même matériel et dans les mêmes conditions opératoires que celles de l'exemple 1, on a mélangé 60 grammes de silice pyrogénée vendue par la société Wacker sous la référence N 20 de surface spécifique d'après BET de l'ordre de 200 ± 30 m²/g, 0,25 gramme de stabilisant thermique vendu par la société Ciba-Geigy sous le nom Irganox 1010 et enfin 200 grammes de la résine polypropylène vendue par la société Appryl sous le nom PPH 3120 MN1.

Le MFI de la composition ainsi préparée est alors mesuré, selon le même mode opératoire que celui de l'exemple 1 et le résultat obtenu est de 15,8 g/10 mn à 230°C et sous une charge de 2,16 kg.

### Essai n° 29 :

Cet essai, qui illustre l'invention, met en oeuvre, comme agent dispersant, un copolymère styrène-anhydride maléique de poids moléculaire moyen égal à 1700. Cet essai montre également l'efficacité de l'agent dispersant utilisé en permettant la comparaison des valeurs de MFI de la composition selon l'invention et celles de la composition témoin de l'essai précédent.

Ainsi avec le même matériel et dans les mêmes conditions opératoires que celles de l'essai précédent, on a mélangé les mêmes constituants dans les mêmes quantités que celles de l'essai n° 28 avec en supplément l'ajout de 0,50 grammes du copolymère styrène-anhydride maléique de poids moléculaire moyen égal à 1700.

Le MFI de la composition ainsi préparée est alors mesuré, selon le même mode opératoire que celui de l'exemple 1 et le résultat obtenu est de 107 g/10 mn à 230°C et sous une charge de 2,16 kg.

### Essai n° 30 :

Cet essai est un essai témoin pour une composition polypropylène chargée à l'aide d'hydroxyde de magnésium. Aucun agent dispersant n'est utilisé.

Ainsi avec le même matériel et dans les mêmes conditions opératoires que celles de l'exemple 1, on a mélangé 300 grammes d'hydroxyde de magnésium vendu par la société Martinswerk sous la référence Magnifin H5 dont le refus à 45 micromètres est inférieur ou égal à 0,1 %, 0,25 gramme de stabilisant thermique vendu par la société Ciba-Geigy sous le nom Irganox 1010 et enfin 200 grammes de la résine polypropylène vendue par la société Appryl sous le nom PPH 3120 MN1.

Le MFI de la composition ainsi préparée est alors mesuré, selon le même mode opératoire que celui de l'exemple 1 et le résultat obtenu est de 63,6 g/10 mn à 230°C et sous une charge de 10 kg.

### Essai n° 31 :

Cet essai, qui illustre l'invention, met en oeuvre, comme agent dispersant, un copolymère styrène-anhydride maléique de poids moléculaire moyen égal à 1700. Cet essai montre également l'efficacité de l'agent dispersant utilisé en permettant la comparaison des valeurs de MFI de la composition selon l'invention et celles de la composition témoin de l'essai précédent.

Ainsi avec le même matériel et dans les mêmes conditions opératoires que celles de l'essai précédent, on a mélangé les mêmes constituants dans les mêmes quantités que celles de l'essai n° 30 avec en supplément l'ajout de 3,00 grammes du copolymère styrène-anhydride maléique de poids moléculaire moyen égal à 1700.

Le MFI de la composition ainsi préparée est alors mesuré, selon le même mode opératoire que celui de l'exemple 1 et le résultat obtenu est de 77,7 g/10 mn à 230°C et sous une charge de 10 kg.

Les tableaux 3 et 3 bis suivants rassemblent les résultats des différents essais de l'exemple.

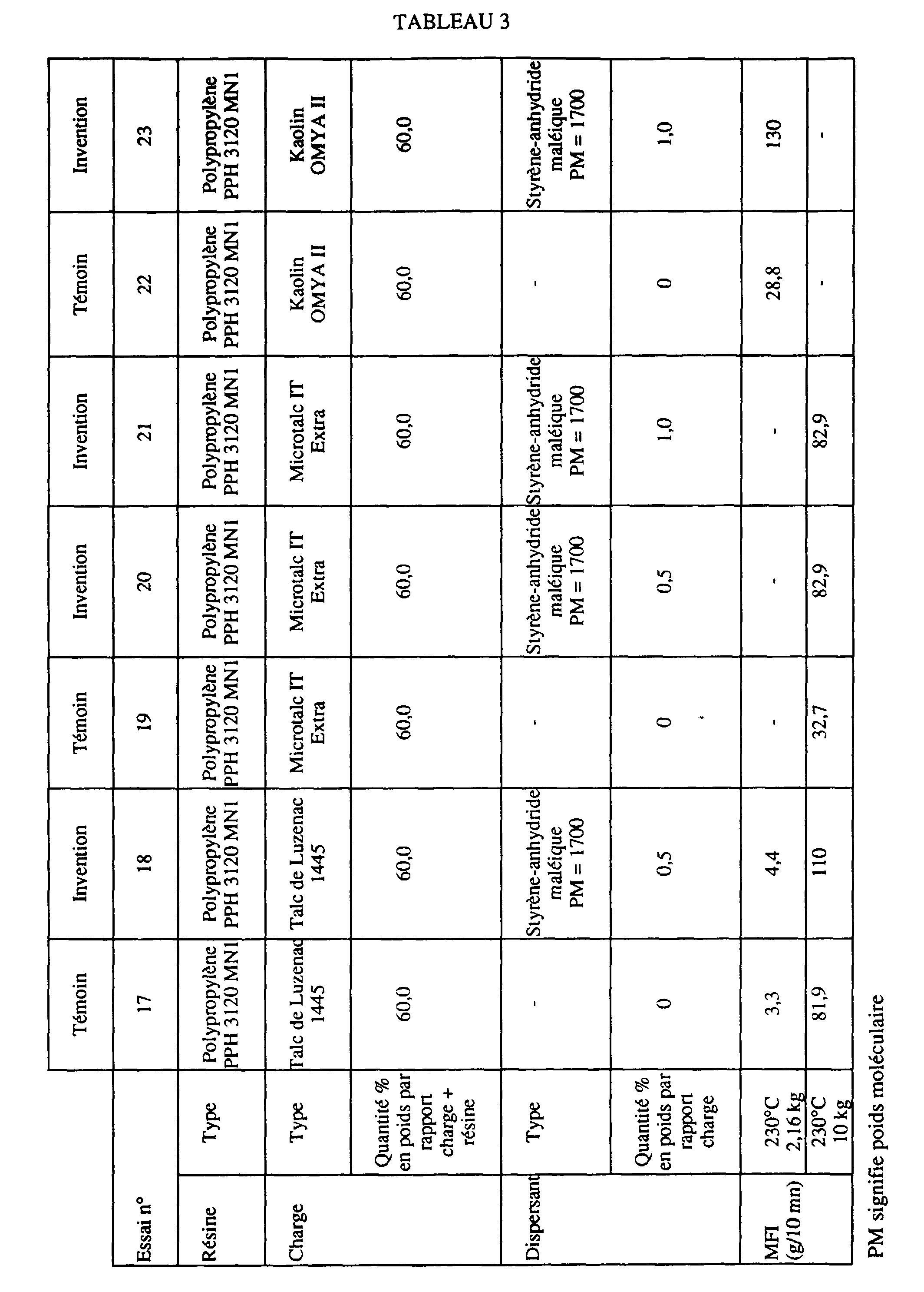

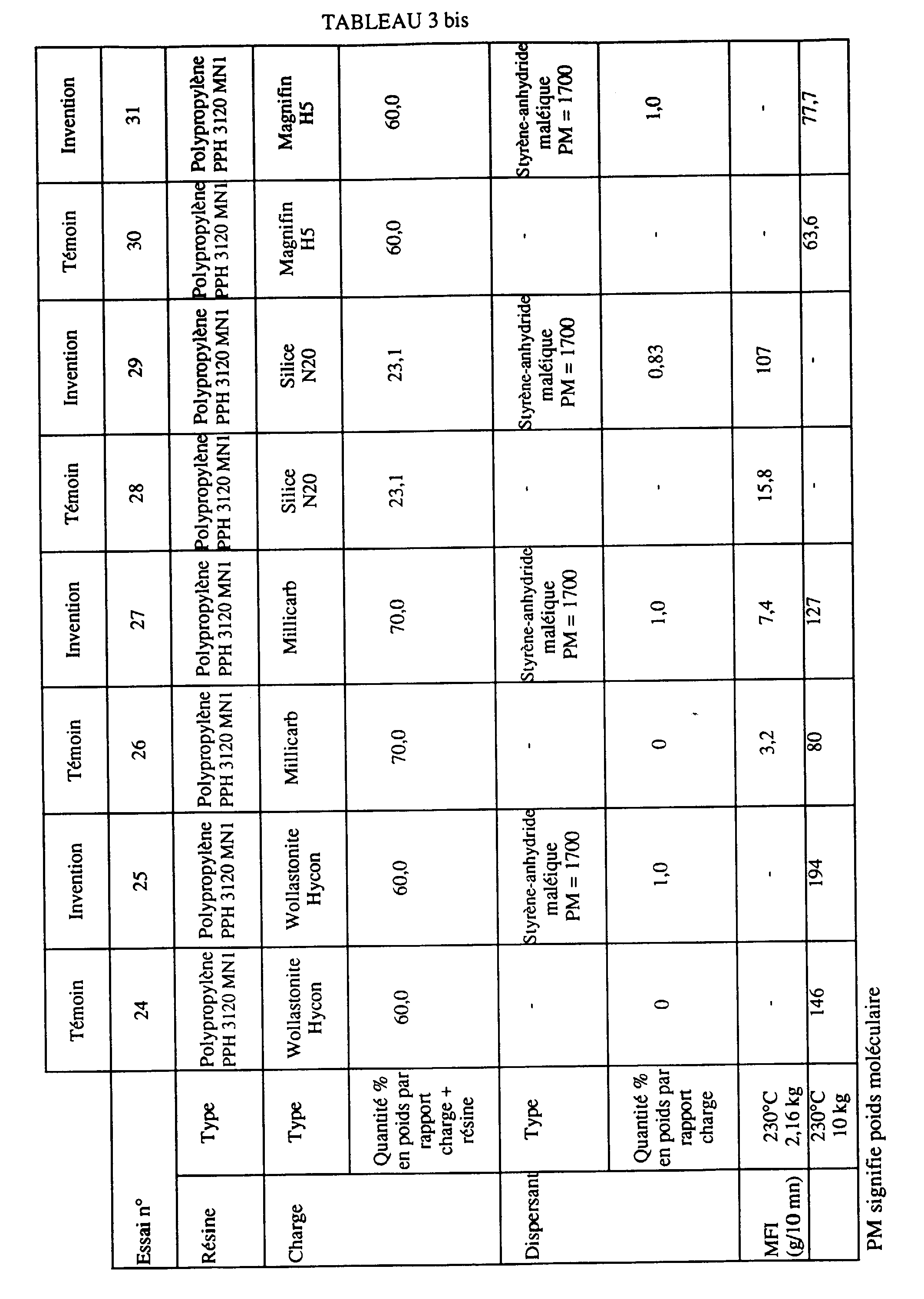

La lecture des tableaux 3 et 3 bis permet de constater la possibilité d'obtenir des compositions thermoplastiques chargées avec différentes charges, fluides et homogènes grâce à l'utilisation, selon l'invention, de copolymère de styrène et d'anhydride maléique de poids moléculaire compris entre 1000 et 3000 et plus particulièrement entre 1500 et 2000 comme agent dispersant.

### EXEMPLE 5 :

Cet exemple a pour but d'illustrer les possibilités de disperser les charges dans différentes résines thermoplastiques.

### Essai n° 32 :

Cet essai est un essai témoin pour une composition thermoplastique du type polyéthylène basse densité chargée à l'aide de silice pyrogénée. Aucun agent dispersant n'est utilisé.

Ainsi avec le même matériel et dans les mêmes conditions opératoires que celles de l'exemple 1 à l'exception de la température de la cuve chauffée électriquement à 190°C, on a mélangé 120 grammes de silice pyrogénée pulvérulente vendue par la société Wacker sous la référence N 20, 0,25 gramme du stabilisant thermique vendu par la société Ciba-Geigy sous le nom Irganox 1010 et enfin 400 grammes de la résine polyéthylène basse densité vendue par la société Norsolor sous la référence MA 2004 grade 20.

Le MFI de la composition ainsi préparée est alors mesuré à 190°C selon le même mode opératoire que celui de l'exemple 1 et le résultat obtenu est de 0,92 g/10 mn à 190°C et sous une charge de 2,16 kg.

### Essai n° 33 :

Cet essai, qui illustre l'invention, met en oeuvre, comme agent dispersant, un copolymère styrène-anhydride maléique de poids moléculaire moyen égal à 1700. Cet essai montre également l'efficacité de l'agent dispersant utilisé en permettant la comparaison des valeurs de MFI de la composition selon l'invention et celles de la composition témoin de l'essai précédent.

Ainsi avec le même matériel et dans les mêmes conditions opératoires que celles de l'essai précédent, on a mélangé les mêmes constituants dans les mêmes quantités que celles de l'essai n° 32 avec en supplément l'ajout de 1,20 grammes du copolymère styrène-anhydride maléique de poids moléculaire moyen égal à 1700.

Le MFI de la composition ainsi préparée est alors mesuré, selon le même mode opératoire que celui de l'exemple précédent et le résultat obtenu est de 1,86 g/10 mn à 190°C et sous une charge de 2,16 kg.

### Essai n° 34 :

Cet essai est un essai témoin pour une composition thermoplastique du type copolymère polyéthylène-polypropylène chargée à l'aide de talc. Aucun agent dispersant n'est utilisé.

Ainsi dans un mélangeur GUITTARD en bras en Z d'une capacité de 1,5 litres, on introduit sous agitation lente de l'ordre de 7,5 tours/mn 300 grammes d'un talc provenant du sud de la France et vendu par la société Talcs de Luzenac sous la référence 1445.

Une fois l'introduction du talc pulvérulent terminée, on attend sous la même agitation et pendant 45 minutes que le talc soit à la température de 240°C, puis on ajoute 0,25 gramme de stabilisant thermique vendu par la société Ciba-Geigy sous le nom IRGANOX 1010 et enfin 200 grammes du copolymère polyéthylène polypropylène vendu par la société Appryl sous le nom de PPC 3120 MN4.

L'ensemble est mélangé durant 15 minutes à cette température et à la vitesse de 75 tours/minute.

Le mélangeur est alors ouvert et tout le talc resté sur les parois est alors remélangé dans la composition agitée pendant 5 minutes supplémentaires.

Le MFI de la composition ainsi préparée est alors mesuré selon le même mode opératoire que celui de l'exemple 1 et le résultat obtenu est de 20,2 g/10 mn à 230°C et sous une charge de 5 kg.

### Essai n° 35 :

Cet essai, qui illustre l'invention, met en oeuvre, comme agent dispersant, un copolymère styrène-anhydride maléique de poids moléculaire moyen égal à 1700. Cet essai montre également l'efficacité de l'agent dispersant utilisé en permettant la comparaison des valeurs de MFI de la composition selon l'invention et celles de la composition témoin de l'essai précédent.

Ainsi avec le même matériel et dans les mêmes conditions opératoires que celles de l'essai précédent, on a mélangé les mêmes constituants dans les mêmes quantités que celles de l'essai n° 34 avec en supplément l'ajout de 3 grammes du copolymère styrène-anhydride maléique de poids moléculaire moyen égal à 1700.

Le MFI de la composition ainsi préparée est alors mesuré, selon le même mode opératoire que celui de l'exemple précédent et le résultat obtenu est de 48,3 g/10 mn à 230°C et sous une charge de 5 kg.

### Essai n° 36 :

Cet essai est un essai témoin pour une composition thermoplastique du type copolymère du butène chargée à l'aide de talc. Aucun agent dispersant n'est utilisé.

Ainsi dans un mélangeur GUITTARD en bras en Z d'une capacité de 1,5 litres, on introduit sous agitation lente de l'ordre de 7,5 tours/mn 375 grammes d'un talc provenant du sud de la France et vendu par la société Talcs de Luzenac sous la référence 1445.

Une fois l'introduction du talc pulvérulent terminée, on maintient la même agitation jusqu'à ce que le talc soit à la température de 150°C, puis on ajoute 0,25 gramme de stabilisant thermique vendu par la société Ciba-Geigy sous le nom IRGANOX 1010 et enfin 125 grammes du copolymère vendu par la société Hüls sous le nom de Vestoplast 408.

L'ensemble est mélangé durant 15 minutes à cette température et à la vitesse de 75 tours/minute.

Le mélangeur est alors ouvert et tout le talc resté sur les parois est alors remélangé dans la composition agitée pendant 5 minutes supplémentaires.

Le MFI de la composition ainsi préparée est alors mesuré selon le même mode opératoire que celui de l'exemple 1 et le résultat obtenu est de 2,98 g/10 mn à 150°C et sous une charge de 5 kg.

### Essai n° 37 :

Cet essai, qui illustre l'invention, met en oeuvre, comme agent dispersant, un copolymère styrène-anhydride maléique de poids moléculaire moyen égal à 1700. Cet essai montre également l'efficacité de l'agent dispersant utilisé en permettant la comparaison des valeurs de MFI de la composition selon l'invention et celles de la composition témoin de l'essai précédent.

Ainsi avec le même matériel et dans les mêmes conditions opératoires que celles de l'essai précédent, on a mélangé les mêmes constituants dans les mêmes quantités que celles de l'essai n° 36 avec en supplément l'ajout de 3,75 grammes du copolymère styrène-anhydride maléique de poids moléculaire moyen égal à 1700.

Le MFI de la composition ainsi préparée est alors mesuré, selon le même mode opératoire que celui de l'exemple précédent et le résultat obtenu est de 8,77 g/10 mn à 150°C et sous une charge de 5 kg.

### Essai n° 38 :

Cet essai est un essai témoin pour une composition thermoplastique du type polyéthylène chargée à l'aide d'hydrate d'alumine. Aucun agent dispersant n'est utilisé.

Ainsi avec le même matériel et dans les mêmes conditions opératoires que celles de l'essai n° 32, on a mélangé 350 grammes d'hydrate d'alumine vendu par la société Martinswerk sous le nom Martinal OL 104, de diamètre moyen allant de 1,3 à 2,6 micromètres, 0,25 gramme du stabilisant thermique vendu par la société Ciba-Geigy sous le nom Irganox 1010 et enfin 150 grammes de la résine polyéthylène basse densité vendue par la société Norsolor sous la référence MA 2004 grade 20.

Le MFI de la composition ainsi préparée est alors mesuré à 190°C, selon le même mode opératoire que celui de l'exemple 1 et le résultat obtenu est de 0,0 g/10 mn à 190°C et sous une charge de 10 kg.

### Essai n° 39 :

Cet essai, qui illustre l'invention, met en oeuvre une charge du type hydrate d'alumine traitée préalablement avec 1 % en poids, par rapport à la charge, d'un copolymère styrène-anhydride maléique de poids moléculaire moyen égal à 1700.

Cet essai montre également l'efficacité de l'agent de traitement utilisé en permettant la comparaison des valeurs de MFI de la composition selon l'invention et celles de la composition témoin de l'essai précédent.

Ainsi dans un mélangeur rapide de type GUEDU d'une capacité de 5 litres, on introduit 600 grammes d'hydrate d'alumine vendu par la société Martinswerk sous le nom de Martinal OL 104 que l'on préchauffe électriquement à 130°C-140°C.

Puis on introduit 6 grammes du copolymère styrène-anhydride maléique de poids moléculaire moyen égal à 1700 avant d'agiter énergiquement le mélange à la vitesse d'environ 1500 tours/minute et pendant 30 minutes.

Au bout de ces 30 minutes le mélange est refroidi à température ambiante.

350 grammes de la charge ainsi traitée sont alors mélangés avec les mêmes quantités et type de résine et stabilisant thermique que dans l'essai n° 38 et dans les mêmes conditions opératoires.

Le MFI de la composition ainsi préparée est alors mesuré à 190°C selon le même mode opératoire que celui de l'exemple 1 et le résultat obtenu est de 9,6 g/10 mn à 190°C et sous une charge de 10 kg.

### Essai n° 40 :

Cet essai est un essai témoin pour une composition thermoplastique du type copolymère éthylène-acétate de vinyle (EVA) à 19 % d'acétate de vinyle chargée à l'aide de craie. Aucun agent dispersant n'est utilisé.

Ainsi dans un mélangeur GUITTARD en bras en Z d'une capacité de 1,5 litres, on introduit, sous agitation lente de l'ordre de 7,5 tours/mn, 300 grammes d'une craie de Champagne vendue par la société Omya S.A. sous le nom d'Etiquette Violette dont 36 % des particules ont un diamètre moyen inférieur à 2 micromètres.

Une fois l'introduction de la craie pulvérulente terminée, on maintient la même agitation jusqu'à ce que la craie soit à la température de 190°C, puis on ajoute 0,25 gramme de stabilisant thermique vendu par la société Ciba-Geigy sous le nom IRGANOX 1010 et enfin 200 grammes du copolymère EVA vendu par la société Enimont sous le nom Riblene FV 2040.

L'ensemble est mélangé durant 15 minutes à cette température et à la vitesse de 75 tours/minute.

Le mélangeur est alors ouvert et toute la craie restée sur les parois est alors remélangée dans la composition agitée pendant 5 minutes supplémentaires.

Le MFI de la composition ainsi préparée est alors mesuré selon le même mode opératoire que celui de l'exemple 1 et le résultat obtenu est de 14,4 g/10 mn à 190°C et sous une charge de 21,6 kg.

### Essai n° 41 :

Cet essai, qui illustre l'invention, met en oeuvre, comme agent dispersant, un copolymère styrène-anhydride maléique de poids moléculaire moyen égal à 1700. Cet essai montre également l'efficacité de l'agent dispersant utilisé en permettant la comparaison des valeurs de MFI de la composition selon l'invention et celles de la composition témoin de l'essai précédent.

Ainsi avec le même matériel et dans les mêmes conditions opératoires que celles de l'essai précédent, on a mélangé les mêmes constituants dans les mêmes quantités que celles de l'essai n° 40 avec en supplément l'ajout de 3,00 grammes du copolymère styrène-anhydride maléique de poids moléculaire moyen égal à 1700.

Le MFI de la composition ainsi préparée est alors mesuré, selon le même mode opératoire que celui de l'exemple précédent et le résultat obtenu est de 20,7 g/10 mn à 190°C et sous une charge de 21,6 kg.

Les tableaux 4 et 4 bis suivants rassemblent les différents essais de l'exemple :

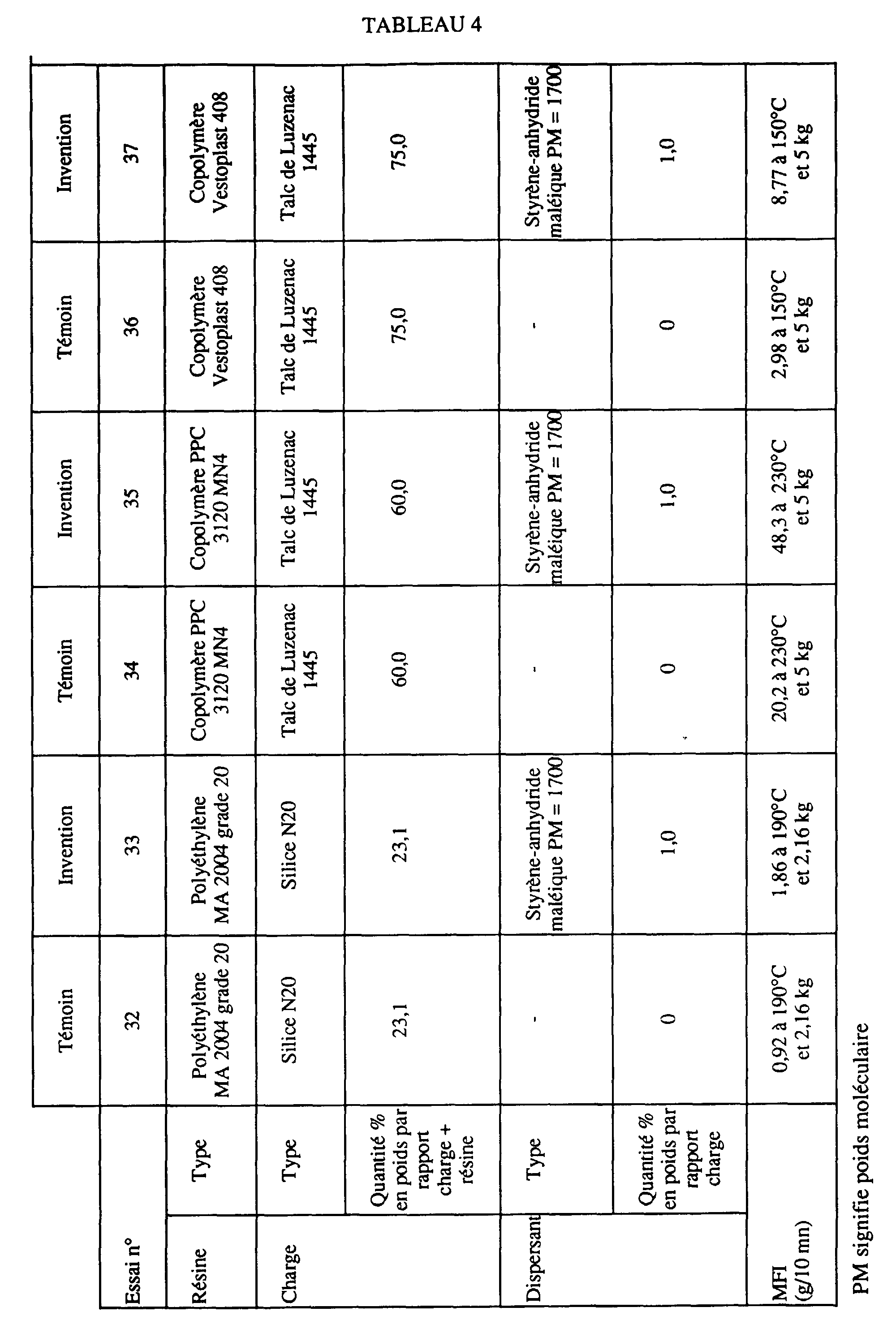

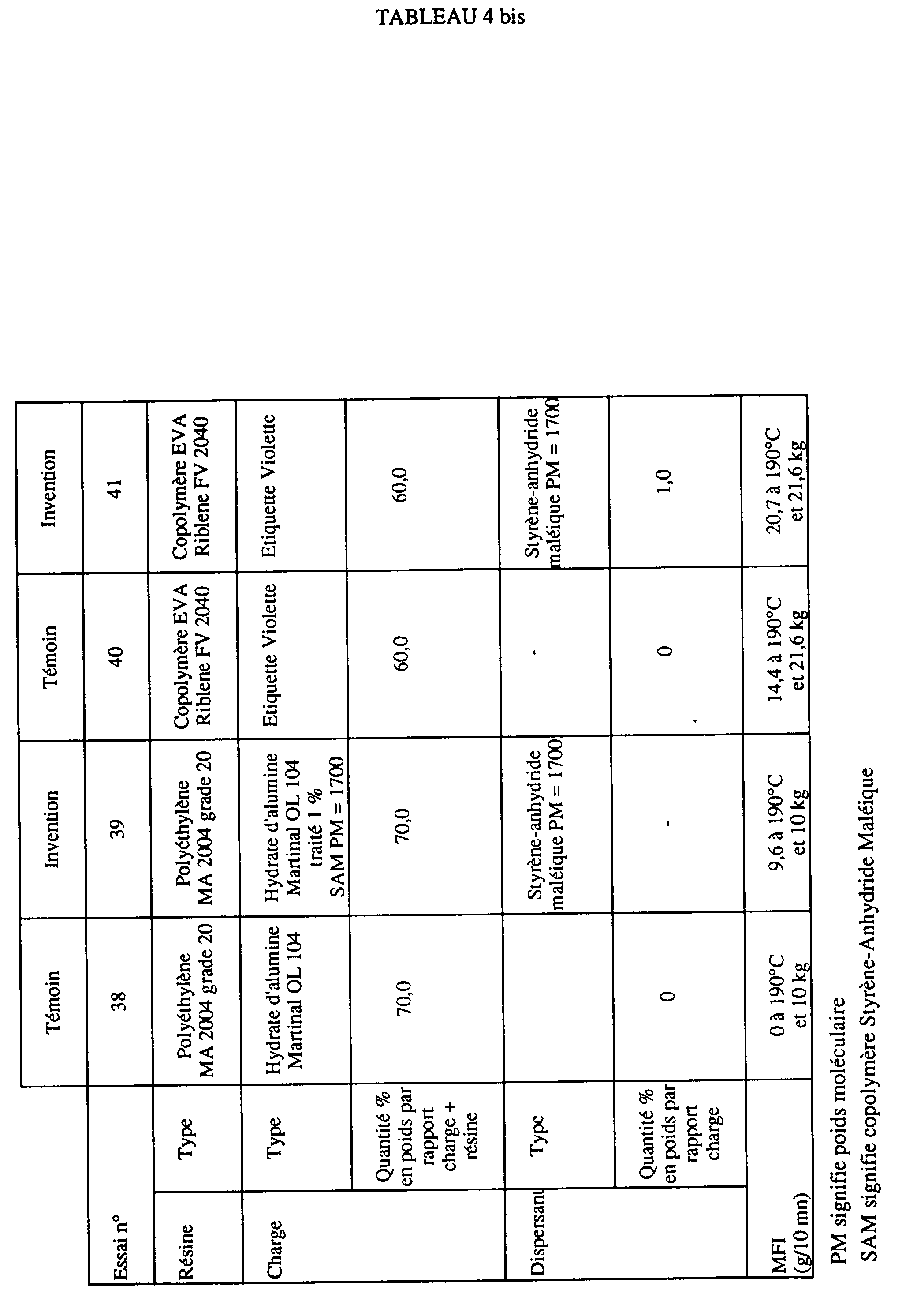

La lecture des tableaux 4 et 4 bis permet de constater que l'utilisation, selon l'invention d'un copolymère styrène-anhydride maléique de poids moléculaire compris entre 1000 et 3000 et plus particulièrement entre 1500 et 2000 permet d'obtenir des compositions thermoplastiques selon l'invention, de stabilité, fluidité et homogénéité améliorée c'est à dire possédant un MFI nettement supérieur aux compositons témoins.

### EXEMPLE 6 :

Le but de cet exemple est d'illustrer que les propriétés mécaniques des compositions thermoplastiques, selon l'invention, ne sont pas dégradées.

Pour ce faire, dans un comalaxeur de laboratoire de type BUSS MDK/E46 disposant d'une zone de malaxage chauffée électriquement, on a introduit pour les essais témoins n° 42 et n° 44 un mélange ayant la composition suivante exprimée en parties en poids :
- Microtalc IT EXTRA 60
   de Norwegian Talc
- Polypropylene 40
   Propathene Gym 45 (ICI)
   d'indice de fluidité 15 (230°C - 2 kg)
et pour les essais, selon l'invention n° 43 et n° 45, un mélange ayant la composition suivante exprimée en parties en poids :
- Microtalc IT EXTRA 60
   de Norwegian Talc
- Polypropylene 39,52
   Propathene Gym 45 (ICI)
   d'indice de fluidité 15 (230°C - 2 kg)
- Agent dispersant 0,48
   Copolymère styrène-anhydride maléique
   de poids moléculaire moyen égal à 1700

Ces compositions ont été prémélangées à la température ambiante puis transférées dans la trémie du comalaxeur BUSS dont la température de la zone de malaxage est de l'ordre de 195°C et le débit à la sortie de 15 kg par heure.

Les MFI des compositions ainsi préparées sont alors mesurés, selon le même mode opératoire que celui de l'exemple 1 et les résultats obtenus sont :
- Pour les essais témoins n° 42 et n° 44 :
   7,5 g/10 mn à 230°C et sous une charge de 5 kg
- Pour les essais, selon l'invention, n° 43 et n° 45 :
   19,5 g/10 mn à 230°C et sous une charge de 5 kg.

La mesure des MFI étant effectuée, on procède alors à la redispersion, dans le polypropylène commercialisé par la société ICI sous le nom de Propathene Gym 45, des compositions thermoplastiques précédemment obtenues.

Pour ce faire, on réalise par injection des éprouvettes normalisées (type ISO) au moyen d'une presse Netstal Sycap 170/90 MP dont les principaux paramètres de réglage sont :
- Diamètre de la vis de 32 mm
- Température de la matière dans le cylindre = 230°C
- Température du moule = 40°C
- Pression d'injection = 550 bars

Les compositions thermoplastiques exprimées en parties en poids sont alors :

### - Essai témoin n° 42 :

- Microtalc IT EXTRA 20
   de Norwegian Talc
- Polypropylene 80
   Propathene Gym 45 (ICI)

### - Essai n° 43, selon l'invention :

- Microtalc IT EXTRA 20
   de Norwegian Talc
- Polypropylene 79,84
   Propathene Gym 45 (ICI)
- Agent dispersant 0,16
   Copolymère styrène-anhydride
   maléique de poids moléculaire
   moyen égal à 1700

### - Essai témoin n° 44 :

- Microtalc IT EXTRA 40
   de Norwegian Talc
- Polypropylene 60
   Propathene Gym 45 (ICI)

### - Essai n° 45, selon l'invention :

- Microtalc IT EXTRA 40
   de Norwegian Talc
- Polypropylene 79,68
   Propathene Gym 45 (ICI)
- Agent dispersant 0,32
   Copolymère styrène-anhydride
   maléique de poids moléculaire
   moyen égal à 1700

Ces différentes compositions thermoplastiques présentent les propriétés mécaniques consignées dans le tableau 5 ci-après et déterminées suivant la norme NF T 51-034 ou ISO R527 pour les caractéristiques en traction (résistance et allongement au seuil d'écoulement et à la rupture), suivant la norme NF T 51-035 ou ISO 179 pour la résistance au choc méthode Charpy non entaillé, suivant la norme NF T 51-001 ou ISO 178 pour le module de flexion.

**TABLEAU 5**

| Essai n° | | Témoin | Invention | Témoin | Invention |
|---|---|---|---|---|---|
| | | 42 | 43 | 44 | 45 |
| Composition en parts avant malaxage | Polypropylene Propathene Gym 45 | 40 | 39,52 | 40 | 39,52 |
| | Talc Microtalc IT | 60 | 60 | 60 | 60 |
| | Copolymère styrène-anhydride maléique | 0 | 0,48 | 0 | 0,48 |
| MFI (g/10 mn) à 230°C - 5 kg | | 7,5 | 19,5 | 7,5 | 19,5 |
| Composition en parts après injection presse | Talc | 20 | 20 | 40 | 40 |
| Propriétés mécaniques | Résistance au seuil d'écoulement (MPa) | 36,4 | 37 | 35,6 | 37,6 |
| | Allongement au seuil d'écoulement (%) | 5,8 | 5,8 | 3,9 | 3,9 |
| | Résistance à la rupture (MPa) | 28,7 | 28,2 | 34,4 | 30 |
| | Allongement à la rupture (%) | 27,1 | 20,9 | 4,7 | 4,2 |
| | Module de flexion à 150 % de déformation | 2,2 | 2,3 | 2,4 | 2,4 |
| | Résistance au choc méthode Charpy non entaillé | | | | |
| | à O°C (mJ/mm²) | 35 | 36 | 31 | 28 |
| | à -23°C (mJ/mm²) | 25 | 28 | 24 | 24 |

La lecture du tableau 5 permet de constater que les compositions selon l'invention sont plus homogènes et plus stables que les compositions témoin (MFI plus élevés) tout en ayant des propriétés mécaniques du même ordre.

## Revendications

1. Utilisation de copolymères de styrène et d'anhydride maléique de poids moléculaire moyen compris entre 1000 et 3000 et plus particulièrement entre 1500 et 2000 comme agent dispersant et/ou de traitement de charges minérales pulvérulentes basiques ou ayant des surfaces possédant des groupes hydroxyles libres dans des résines thermoplastiques, homopolymères sans groupe aryle et à squelette uniquement carboné ou copolymères sans groupe aryle et à squelette composé uniquement de carbone et d'oxygène dont la teneur en atomes d'oxygène ne dépasse pas 22 % en poids ou leurs mélanges.

2. Utilisation de copolymères de styrène et d'anhydride maléique de poids moléculaire moyen compris entre 1000 et 3000 et plus particulièrement entre 1500 et 2000 selon la revendication 1 caractérisée en ce que les charges minérales pulvérulentes basiques ou ayant des surfaces possédant des groupes hydroxyles libres sont choisies parmi les carbonates de calcium naturels ou synthétiques, les talcs, les kaolins, les silicates d'aluminium, les micas, la wollastonite, la bentonite, la silice pyrogénée, l'hydroxyde de magnésium, d'aluminium, de calcium, de fer ou leurs mélanges.

3. Utilisation de copolymères de styrène et d'anhydride maléique de poids moléculaire moyen compris entre 1000 et 3000 et plus particulièrement entre 1500 et 2000 selon la revendication 2 caractérisée en ce que les charges minérales pulvérulentes basiques ou ayant des surfaces possédant des groupes hydroxyles libres sont choisies parmi les talcs, les carbonates de calcium naturels ou synthétiques, les kaolins, la wollastonite, la silice pyrogénée, l'hydroxyde de magnésium, l'hydroxyde d'aluminium ou leurs mélanges et plus partiulièrement parmi les talcs.

4. Utilisation de copolymères de styrène et d'anhydride maléique de poids moléculaire moyen compris entre 1000 et 3000 et plus particulièrement entre 1500 et 2000 selon la revendication 1 caractérisée en ce que les résines thermoplastiques, homopolymères sans groupe aryle et à squelette uniquement carboné ou copolymères sans groupe aryle et à squelette composé uniquement de carbone et d'oxygène dont la teneur en atomes d'oxygène ne dépasse pas 22 % en poids sont choisies parmi les homopolymères ou copolymères de l'éthylène, du propylène, du butène, du butadiène, du butylène et ses isomères, de l'éthylène-acétate de vinyle ou leurs mélanges.

5. Utilisation de copolymères de styrène et d'anhydride maléique de poids moléculaire moyen compris entre 1000 et 3000 et plus particulièrement entre 1500 et 2000 selon la revendication 4 caractérisée en ce que les résines thermoplastiques, homopolymères sans groupe aryle et à squelette uniquement carboné ou copolymères sans groupe aryle et à squelette composé uniquement de carbone et d'oxygène dont la teneur en atomes d'oxygène ne dépasse pas 22 % en poids sont choisies parmi les polypropylènes, polyéthylènes, copolymères d'éthylène-propylène, copolymères du butène, et plus particulièrement parmi les polypropylènes.

6. Utilisation de copolymères de styrène et d'anhydride maléique de poids moléculaire moyen compris entre 1000 et 3000 et plus particulièrement entre 1500 et 2000 selon la revendication 1 caractérisée en ce que l'on utilise 0,25 % à 3 % en poids, par rapport au poids total de la charge minérale pulvérulente, du copolymère de styrène et d'anhydride maléique de poids moléculaire moyen compris entre 1000 et 3000 et plus particulièrement entre 1500 et 2000.

7. Utilisation de copolymères de styrène et d'anhydride maléique de poids moléculaire moyen compris entre 1000 et 3000 et plus particulièrement entre 1500 et 2000 selon la revendication 6 caractérisée en ce que l'on utilise 0,5 % à 1 % en poids, par rapport au poids total de la charge minérale pulvérulente, du copolymère de styrène et d'anhydride maléique de poids moléculaire moyen compris entre 1000 et 3000 et plus particulièrement entre 1500 et 2000.

8. Composition thermoplastique chargée, stable, homogène et fluide caractérisée en ce qu'elle comprend :
a) la résine thermoplastique, homopolymère sans groupe aryle et à squelette uniquement carboné ou copolymère sans groupe aryle et à squelette composé uniquement de carbone et d'oxygène dont la teneur en atomes d'oxygène ne dépasse pas 22 % en poids, ou leur mélange
b) jusqu'à 80 % en poids de charge minérale pulvérulente basique ou à surface disposant de groupes hydroxyles libres, par rapport au poids total de la charge et de la résine
c) 0,25 % à 3,0 % en poids, par rapport au poids total de la charge minérale pulvérulente, d'un copolymère de styrène et d'anhydride maléique de poids moléculaire moyen compris entre 1000 et 3000 et plus particulièrement entre 1500 et 2000
d) éventuellement, d'autres additifs de type connu tels que les stabilisants thermiques ou photochimiques, les antioxydants, les lubrifiants, les plastifiants, les antistatiques, les ignifugeants, les désactivateurs de métaux, les billes de verre, les billes de verre, les fibres minérales et/ou organiques, les pigments.

9. Composition thermoplastique chargée, stable, homogène et fluide selon la revendication 8 caractérisée en ce qu'elle comprend :
a) la résine thermoplastique, homopolymère sans groupe aryle et à squelette uniquement carboné ou copolymère sans groupe aryle et à squelette composé uniquement de carbone et d'oxygène dont la teneur en atomes d'oxygène ne dépasse pas 22 % en poids, ou leurs mélanges, choisie parmi les polymères ou copolymères de l'éthylène, du propylène, du butène, du butadiène, du butylène et ses isomères, de l'éthylène-acétate de vinyle et plus particulièrement choisie parmi les polypropylènes, polyéthylènes, copolymères d'éthylène-propylène, copolymères du butène
b) de 20 % à 80 % en poids de charge minérale pulvérulente basique ou à surface disposant de groupes hydroxyles libres, par rapport au poids total de la charge et de la résine, choisie parmi les carbonates de calcium naturels ou synthétiques, les talcs, les kaolins, la wollastonite, la silice pyrogénée, l'hydroxyde de magnésium, l'hydroxyde d'aluminium ou leurs mélanges
c) 0,25 % à 3,0 % en poids, par rapport au poids total de la charge minérale pulvérulente, d'un copolymère de styrène et d'anhydride maléique de poids moléculaire moyen compris entre 1000 et 3000 et plus particulièrement entre 1500 et 2000
d) éventuellement, d'autres additifs de type connu tels que les stabilisants thermiques ou photochimiques, les antioxydants, les lubrifiants, les plastifiants, les antistatiques, les ignifugeants, les désactivateurs de métaux, les billes de verre, les billes de verre, les fibres minérales et/ou organiques, les pigments.

10. Composition thermoplastique chargée, stable, homogène et fluide selon la revendication 9 caractérisée en ce qu'elle comprend :
a) une résine thermoplastique choisie parmi les polypropylènes
b) de 20 % à 80 % en poids de charge minérale pulvérulente basique ou à surface disposant de groupes hydroxyles libres, par rapport au poids total de la charge et de la résine, choisie parmi les talcs
c) 0,25 % à 3,0 % en poids, par rapport au poids total de la charge minérale pulvérulente, d'un copolymère de styrène et d'anhydride maléique de poids moléculaire moyen compris entre 1000 et 3000 et plus particulièrement entre 1500 et 2000
d) éventuellement, d'autres additifs de type connu tels que les stabilisants thermiques ou photochimiques, les antioxydants, les lubrifiants, les plastifiants, les antistatiques, les ignifugeants, les désactivateurs de métaux, les billes de verre, les billes de verre, les fibres minérales et/ou organiques, les pigments.

11. Composition thermoplastique chargée, stable, homogène et fluide selon la revendication 8 caractérisée en ce qu'elle comprend :
a) une résine thermoplastique choisie parmi les polymères ou copolymères de l'éthylène, du propylène, du butène, du butadiène, du butylène et ses isomères, de l'éthylène-acétate de vinyle et plus particulièrement choisie parmi les polypropylènes, polyéthylènes, copolymères d'éthylène-propylène et copolymères du butène
b) jusqu'à 80 % en poids, par rapport au poids total de la charge et de la résine, de charge minérale pulvérulente basique ou à surface disposant de groupes hydroxyles libres choisie parmi les carbonates de calcium naturels ou synthétiques, les talcs, les kaolins, la wollastonite, la silice pyrogénée, l'hydroxyde de magnésium, l'hydroxyde d'aluminium ou leurs mélanges
c) de 0,5 % à 1,0 % en poids, par rapport au poids total de la charge minérale pulvérulente, d'un copolymère de styrène et d'anhydride maléique de poids moléculaire moyen compris entre 1000 et 3000 et plus particulièrement entre 1500 et 2000
d) éventuellement, d'autres additifs de type connu tels que les stabilisants thermiques ou photochimiques, les antioxydants, les lubrifiants, les plastifiants, les antistatiques, les ignifugeants, les désactivateurs de métaux, les billes de verre, les fibres minérales et/ou organiques, les pigments.

12. Composition thermoplastique chargée, stable, homogène et fluide selon la revendication 11 caractérisée en ce qu'elle comprend :
a) une résine thermoplastique choisie parmi les polymères ou copolymères de l'éthylène, du propylène, du butène, du butadiène, du butylène et ses isomères, de l'éthylène-acétate de vinyle et plus particulièrement choisie parmi les polypropylènes, polyéthylènes, copolymères d'éthylène-propylène et copolymères du butène
b) de 20 % à 80 % en poids, par rapport au poids total de la charge et de la résine, de charge minérale pulvérulente basique ou à surface disposant de groupes hydroxyles libres choisie parmi les carbonates de calcium naturels ou synthétiques, les talcs, les kaolins, la wollastonite, la silice pyrogénée, l'hydroxyde de magnésium, l'hydroxyde d'aluminium ou leurs mélanges
c) de 0,5 % à 1,0 % en poids, par rapport au poids total de la charge minérale pulvérulente, d'un copolymère de styrène et d'anhydride maléique de poids moléculaire moyen compris entre 1000 et 3000 et plus particulièrement entre 1500 et 2000
d) éventuellement, d'autres additifs de type connu tels que les stabilisants thermiques ou photochimiques, les antioxydants, les lubrifiants, les plastifiants, les antistatiques, les ignifugeants, les désactivateurs de métaux, les billes de verre, les fibres minérales et/ou organiques, les pigments.

13. Composition thermoplastique chargée, stable, homogène et fluide selon la revendication 11 caractérisée en ce qu'elle comprend :
a) une résine thermoplastique choisie parmi les propylènes
b) jusqu'à 80 % en poids, par rapport au poids total de la charge et de la résine, de charge minérale pulvérulente basique ou à surface disposant de groupes hydroxyles libres choisie parmi les talcs
c) de 0,5 % à 1,0 % en poids, par rapport au poids total de la charge minérale pulvérulente, d'un copolymère de styrène et d'anhydride maléique de poids moléculaire moyen compris entre 1000 et 3000 et plus particulièrement entre 1500 et 2000
d) éventuellement, d'autres additifs de type connu tels que les stabilisants thermiques ou photochimiques, les antioxydants, les lubrifiants, les plastifiants, les antistatiques, les ignifugeants, les désactivateurs de métaux, les billes de verre, les fibres minérales et/ou organiques, les pigments.

14. Composition thermoplastique chargée, stable, homogène et fluide selon la revendication 13 caractérisée en ce qu'elle comprend :
a) une résine thermoplastique choisie parmi les propylènes
b) de 20 % à 80 % en poids, par rapport au poids total de la charge et de la résine, de charge minérale pulvérulente basique ou à surface disposant de groupes hydroxyles libres choisie parmi les talcs
c) de 0,5 % à 1,0 % en poids, par rapport au poids total de la charge minérale pulvérulente, d'un copolymère de styrène et d'anhydride maléique de poids moléculaire moyen compris entre 1000 et 3000 et plus particulièrement entre 1500 et 2000
d) éventuellement, d'autres additifs de type connu tels que les stabilisants thermiques ou photochimiques, les antioxydants, les lubrifiants, les plastifiants, les antistatiques, les ignifugeants, les désactivateurs de métaux, les billes de verre, les fibres minérales et/ou organiques, les pigments.

15. Application de la composition thermoplastique selon l'une des revendications 8 à 14 à la fabrication de produits en matière plastique.
